# EUROPÄISCHE PATENTSCHRIFT

(11) **EP 1 806 805 B1**
(45) Veröffentlichungstag und Bekanntmachung des Hinweises auf die Patenterteilung: **14.03.2012**
(21) Anmeldenummer: 07000208.4
(22) Anmeldetag: 05.01.2007
(51) Int. Cl.: H01M 8/12, H01M 4/86

(54) **Kathode-Electrolyt-Anode-Einheit für Festoxid-Brennstoffzellen und Verfahren zu deren Herstellung**
Cathode electrolyte anode unit for solid oxide fuel cells and method for their production
Unité cathode - anode - électrolyte pour piles à combustible à oxyde solide et procédé destiné à sa fabrication

(30) Priorität: 06.01.2006 DE 102006001552
(43) Veröffentlichungstag der Anmeldung: 11.07.2007
(73) Patentinhaber: Fraunhofer-Gesellschaft zur Förderung der angewandten Forschung e.V., 80686 München (DE)
(72) Erfinder: Kusnezoff, Mihails, Dr.-Ing., 01309 Dresden (DE); Mosch, Sindy, Dr.-Ing., 01159 Dresden (DE); Trofimenko, Nikolai, Dr.rer.nat., 01069 Dresden (DE)
(74) Vertreter: Pfenning, Meinig & Partner GbR

(56) Entgegenhaltungen:
- EP-A- 1 455 404
- WO-A-2005/122300
- DE-A1- 10 342 162
- DE-A1- 19 630 991
- DE-B4- 19 681 750

## Beschreibung

Die Erfindung betrifft Kathoden-Elektrolyt-Anoden-Einheiten für Festoxid-Brennstoffzellen (SOFC) sowie 1 ein Verfahren zu deren Herstellung.

Eine bekannte Aufbauvariante für planare, aufeinander gestapelte SOFC-Zellen (sog. SOFC-"Stacks") basiert auf der Verwendung von metallischen Substraten als Träger für die elektrochemisch aktiven Zellschichten, die vorzugsweise durch ein Vakuum-Plasma-SpritzVerfahren (vgl. bspw. die WO 02/101859 A2), durch Nasspulverspritzen (NPS) mit hachfolgender Sinterung im Wasserstoff oder durch eine elektrophoretische Abscheidung (EPA) mit nachfolgender Sinterung unter 1000°C im Argon realisiert werden können.

Üblicherweise werden dabei als Trägersubstrate Vliese aus Nickel oder gesinterte hochporöse Platten aus Chrombasislegierungen (WO 02/101859 A2) oder Verbundstrukturen bestehend aus Drahtgestricken bzw. aus Streckmetall mit gesinterten Pulverdeckschichten aus ferritischen Stählen oder aus der nickelhaltigen Anode eingesetzt.

Die erwähnten Nickelvliese besitzen einen zu hohen thermischen Ausdehnungskoeffizienten und eignen sich aufgrund der während des Vakuum-Plasma-Spritzens auftretenden starken Verwölbungen nur bedingt zur Herstellung technisch sinnvoller Zellgrößen (bspw. in der Größenordnung von größer/gleich 80 cm²).

Chrombasislegierungen hingegen sind bei T>800°C nicht ausreichend stabil. Eine im Brennstoffzellen-Betrieb erfolgende Abdampfung von Chromverbindungen führt zu Alterungserscheinungen insbesondere in der Kathode und somit zu Leistungsverlusten in der Brennstoffzelle. Ferritische Chrom-Eisen-Legierungen weisen in der Regel auch höhere thermische Ausdehnungskoeffizienten im Vergleich zum Ausdehnungskoeffizienten des Elektrolyten auf.

Das thermische Verhalten der gasdichten Elektrolytschichten, die durch VPS und EPA bzw. NPS hergestellt sind, unterscheidet sich erheblich. Da die VPS-Schichten bei Temperaturen < 500°C hergestellt werden, kann das Aufheizen der Zelle auf die Betriebstemperatur von 650-800°C zu Zugspannungen in der Elektrolytschicht führen, da der thermische Ausdehnungskoeffizient (TAK) des Elektrolyten kleiner, als der thermische Ausdehnungskoeffizient des Metallsubstrates ist. Die EPA- bzw. NPS-Schichten sind bei der Sintertemperatur (< 1200°C) frei von mechanischen Spannungen, die in der Regel höher als die Betriebstemperatur liegt, und stehen dadurch bei der Betriebstemperatur unter Druckspannungseinfluss. Da die Zugspannungen in der Keramik zur Rissbildung führen, ist bei VPS-Schichten ein Substrat mit geringem TAK zu bevorzugen (vgl. bspw. die DE10325862 A1).

Es wurde erkannt, dass in einem Brennstoffzellen-Stack das dicke Trägersubstrat bezüglich der Wärmeausdehnung, im Vergleich zu den auf diesem aufgebrachten elektrochemisch aktiven Schichten, das dominierende Bauelement darstellt. Dadurch kommt es bei der Abkühlung der beschichteten Substrate zu einer Substrat-Verwerfung.

Bei dünnem nicht schwindendem metallischem Trägersubstrat dominieren die Sinterspannungen, die aus dem Sintern des Elektrolyten resultieren, da die Steifigkeit des Substrates bei Temperaturen > 700°C stark abfällt. Das kann ebenfalls zur Verwerfung des Substrates beim Sintern der Elektrolytschicht führen. Die Verwerfung beeinflusst erheblich die Stapelbarkeit der Zellen in einem Stack. Bei einer Verwerfung > 0.5 mm können die Zellen nicht ohne Schädigungen in einen Stack eingebaut werden.

Die ferritischen Träger-Substrate wirken, da sie kein Nickel enthalten, in Verbindung mit nickelhaltigen Anoden (die elektrochemisch aktive Zellschicht auf der Brenngasseite enthält Ni als Katalysator), als sog. Nickelsenke. Dies führt zu Interdiffusionserscheinungen zwischen dem metallischen Substrat und der Nickel-Anode bzw. der elektrochemisch aktiven Zellschicht. Die Eigenschaften der Werkstoffe der einzelnen Komponenten verändern sich, was zu hohen Polarisationsverlusten der Anode sowie einer Degradation der Zelle im Langzeitbetrieb führt. Weiterhin bilden kommerzielle ferritische Stähle im Brennstoffzellen-Betrieb störende Zwischenschichten aus (z.B.: Chrom- und Aluminiumoxide), die zu Degradationserscheinungen führen können.

Aus WO 2005/122300 sind Festoxid-Brennstoffzellen bekannt, bei denen eine Zwischenschicht zur Vermeidung von Diffusion vorhanden sein soll.

Das DE 196 81 759 B4 betrifft eine elektrische Verbindungsvorrichtung für planare Brennstoffzellen.

In EP 1 455 404 A2 sind Brennstoffzellen sowie ein Herstellungsverfahren für diese Zellen offenbart. Dabei ist neben den Elektroden und dem Elektrolyten eine Bipolarplatte und eine poröse Trägerstruktur vorhanden.

In DE 196 30 991 A1 werden für Komponenten von Hochtemperatur-Brennstoffzellen geeignete Werkstoffe vorgeschlagen.

Aufgabe der Erfindung ist es, ebene und bei Betriebstemperatur langzeitstabile Kathode-Elektrolyt-Anode-Einheiten, die nahezu verwerfungsfrei sind und mit denen eine Degradation der Anode durch die Interdiffusionserscheinungen zwischen der Anode und dem metallischen Substrat im Betrieb der Hochtemperaturbrennstoffzelle verhindert werden kann, zur Verfügung zu stellen.

Diese Aufgabe wird mit einer Kathoden-Elektrolyt-Anoden-Einheit, die die Merkmale des Anspruchs 1 aufweist, gelöst. Sie kann mit einem Verfahren nach Anspruch 10 hergestellt werden. Vorteilhafte Ausgestaltungen und Weiterbildungen der Erfindung können mit den in den untergeordneten Ansprüchen bezeichneten Merkmalen erreicht werden.

Bei den erfindungsgemäßen Kathode-Elektrolyt-Anode-Einheiten ist ein poröses metallisches Substrat vorhanden. Dieses wird in Form einer ebenen Platte eingesetzt und es kann durch Sinterung eines Metallpulvers hergestellt worden sein. Auf dem Substrat ist ein Mehrschichtaufbau realisiert, mit dem auch die poröse Kathode, die poröse Anode und der Elektrolyt gebildet worden sind.

Zusätzlich ist aber zwischen Substrat und der die Anode bildenden Schicht eine Zwischenschicht ausgebildet worden, die eine Barrierewirkung bei einem Sauerstoffpartialdruck oberhalb von 10⁻¹² bar für Chrom und Eisen aufweist.

Für die Herstellung eines Substrats kann vorteilhaft ein Metallpulver einer warmfesten Cr-Fe Legierung, die mindestens 22% Cr enthält, verwendet werden. Auf ein im Wesentlichen ebenes planares durch Sinterung hergestelltes plattenförmiges Substrat können mehrere Schichten nacheinander aufgetragen werden und den Schichtaufbau einer KEA bilden. Nachfolgend an den Auftrag der einzelnen Schichten kann eine Wärmebehandlung durchgeführt werden. Diese Wärmebehandlung soll in einer reduzierenden Wasserstoffatmosphäre bei einer Mindesttemperatur von 1000°C, bevorzugt im Temperaturbereich zwischen 1100-1450°C und vorteilhaft im Cofiring, also einer gleichzeitigen Wärmebehandlung mehrerer Schichten, durchgeführt werden.

Unmittelbar auf einer Oberfläche des Substrats wird die unter reduzierenden Bedingungen elektronisch leitende poröse Zwischenschicht, die mit einer Keramik, vorteilhafterweise aus (La, Ca) (Ti, Cr, Ru) O₃ und/oder TiC als leitfähige Phase, die thermomechanisch und chemisch zum Elektrolytwerkstoff kompatibel sind, ausgebildet. Die Zwischenschicht verhindert eine Nickel-Diffusion aus der Anode in das metallische Substrat. Die Zwischenschicht kann erfindungsgemäß mit einem Seltenerd- Calcium-Titanat, Seltenerd--Calcium-Chromit-Titanat, mit Titancarbid jeweils allein oder auch als Gemisch davon gebildet sein. Besonders bevorzugt ist hierfür (La₁₋ₓ Caₓ)_{1-α} (Cr₁-yTiy)_{1-β}O_{3-δ}, wobei x = 0,7-1, y = 0,7-1, α = 0-0,15, β= 0-0,1 und δ = 0-0,1 sind.

Auf der Zwischenschicht wird eine weitere Schicht, die die poröse Anode bildet aufgebracht. Diese Schicht kann vorteilhaft mit Ce₁₋ₓMeₓO₂, einer Mischung aus Ce₁₋ₓMeₓO₂ und dem Stoff oder Stoffgemisch der Zwischenschicht oder aus Ni/Ce₁₋ₓMeₓO₂ bzw. Ni/Zr₁-ₓMeₓO₂ Cermet mit Me als Erdalakali- oder Seltenerdmetall, gebildet sein.

Auf der die Anode bildenden Schicht wird eine weitere den Elektrolyten bildende Schicht, mit hoher Gründichte und mit einer Schichtdicke von 10-100 µm aufgebracht. Diese kann vorteilhaft mit Scandium stabilisiertem Zirkonoxid gebildet werden.

Zusätzlich kann eine unter reduzierenden Bedingungen elektronisch leitende weitere Zwischenschicht auf der gegenüberliegenden Seite des Substrats aufgebracht werden. Diese weitere Zwischenschicht kann ebenfalls mit einer Keramik, vorteilhaft mit (La,Ca)(Ti,Cr,Ru)O₃ gebildet sein. Zusätzlich kann TiC als leitfähige Phase für die Unterdrückung der Substratverwerfung beim Sintern des Elektrolyten in dieser Zwischenschicht enthalten sein.

Die Dicke, laterale Abmessungen, Lay-out und Schwindung dieser Zwischenschicht kann so angepasst werden, dass die Verwerfung des Substrates beim Sintern und Abkühlen minimal ist.

Auf die ggf. bereits gesinterte Elektrolytschicht wird eine niedrigsinternde Schicht, die die Kathode bildet aufgebracht (Ts>900°C). Diese Schicht kann beispielsweise mit La_{0.6}Sr_{0.4}Fe_{0.8}Co_{0.2}O₃ gebildet sein. Zwischen Elektrolyt und Kathode kann eine weitere CeO₂-haltige Zwischenschicht aufgebracht sein. Diese Schichten können vorteilhaft an Luft bei Tₛ< 900°C gesintert werden. Die Versinterung der Kathode kann vorteilhaft beim ersten Aufheizen der Brennstoffzelle bei deren Betrieb erfolgen. Vorab bei der ersten Wärmebehandlung kann lediglich eine nicht zur Sinterung führende Trocknung der Kathode durchgeführt werden.

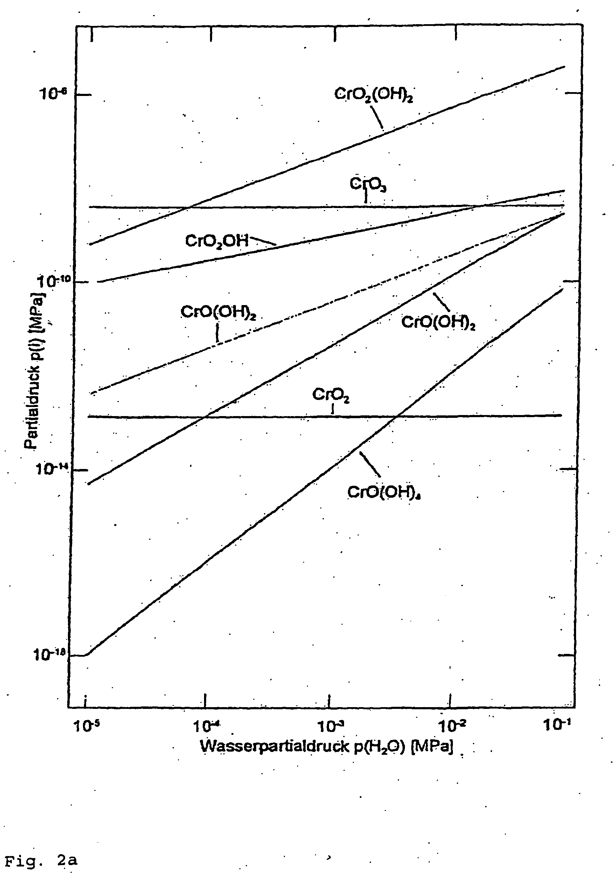

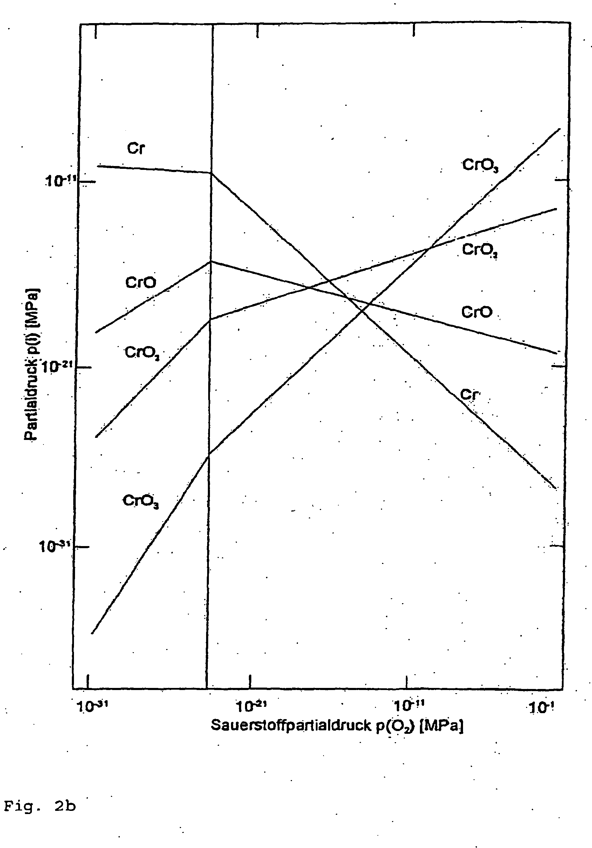

Die Sintertemperatur eines kommerziell erhältlichen Pulvers, das für die Ausbildung des Elektrolyten geeignet ist, (Sinterdichte >92%) liegt oberhalb von 1300°C. Das poröse metallische Substrat ist bei diesen Temperaturen nicht oxidationsstabil und soll durch die Verwendung von Wasserstoff bei der Wärmebehandlung vor Oxidation geschützt werden. Da die verwendeten Materialien unter reduzierenden Bedingungen stabil sind, können die entsprechenden Schichten ähnlich wie an Luft durch die Sinterung unter reduzierender Atmosphäre ausgebildet werden. Der Elektrolyt wird üblicherweise bei T>1300°C in einer Wasserstoffatmosphäre gasdicht gesintert. Der Austritt von Cr-Spezies aus dem Substrat in Richtung Ni-haltiger Anode und Ni-Spezies aus der Anode in Richtung Metallsubstrat wird durch das Verwenden der trockenen wasserstoffhaltigen Atmosphäre (pO₂<10⁻¹¹ atm, pH₂O<0.5%) und mit der Zwischenschicht, z.B. mit La-Ca-TiO₃-Schichten, verhindert. Die Verwendung des trockenen Wasserstoffs beim Sintern der Schichten unterdrückt eine Bildung der CrO₂(OH)₂- und CrO₃-haltigen gasförmigen Spezies (Fig. 2 zeigt Partialdrücke der Crhaltigen gasförmigen Spezies bei 950°C). Die Verwendung von keramischen Zwischenschichten unterdrückt die Cr- und Ni-Interdiffusion zwischen der Anode und Metallsubstrat.

Die Haftung der Zwischenschicht auf dem Metallsubstrat bzw. der Anode auf der Zwischenschicht wird durch die Cr- und Ni-Löslichkeit im Mischoxid realisiert.

Da im Wasserstoff Nickel in metallischer Form vorliegt kann beim Sintern auch eine beschleunigte Ni-Agglomeration in der Anode stattfinden. Dies führt zur Formierung von bei geringeren Temperaturen langzeitstabileren Gefügen, da die Voralterung der Anode schon bei höheren Temperaturen erfolgt ist.

Die einseitige Verwerfung des metallischen Substrates während der Elektrolytsinterung kann mit der weiteren Zwischenschicht auf der Substratrückseite unterbunden werden. Die Steifigkeit eines Substrates kann durch eine Voroxidation bei der Wärmebehandlung erhöht werden, dabei bildet sich eine definierte Oxidschicht auf der Substratoberfläche aus. Die Sinterspannungen im Elektrolyten und in den an das Metallsubstrat angrenzenden Schichten können durch die plastische Verformung der Teilchen im Substrat bei hohen Temperaturen abgebaut werden. Beim Abkühlen wird das Substrat steifer (ab ca. 800-900°C) und bestimmt die Wärmeausdehnung der Brennstoffzelle. Da der thermische Ausdehnungskoeffizient des Substrates über dem des Elektrolyten und anderen keramischen Schichten liegt, werden in der Keramik beim weiteren Abkühlen nur Druckspannungen erzeugt (keine Bruchgefährdung der Keramik durch Zugspannungen).

Nachfolgend soll die Erfindung beispielhaft näher erläutert werden.

Dabei zeigen:
Figur 1 in schematischer Form einen Schichtaufbau eines Beispiels für eine erfindungsgemäße Kathode-Elektrolyt-Anode-Einheit;
Figur 2 Diagramme für Partialdrücke chromhaltiger gasförmiger Spezies bei einer Temperatur von 950 °C und
Figur 3 ebenfalls den Schichtaufbau eines Beispiels nach Figur 1 in sequentieller Form.

Eine vorteilhafte Realisierung einer erfindungsgemäßen Kathoden-Elektrolyt-Anode-Einheit wird an folgendem Ausführungsbeispiel näher erläutert.

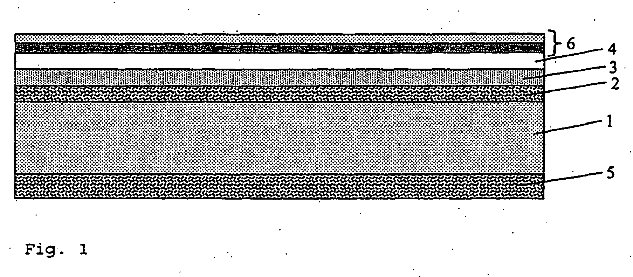

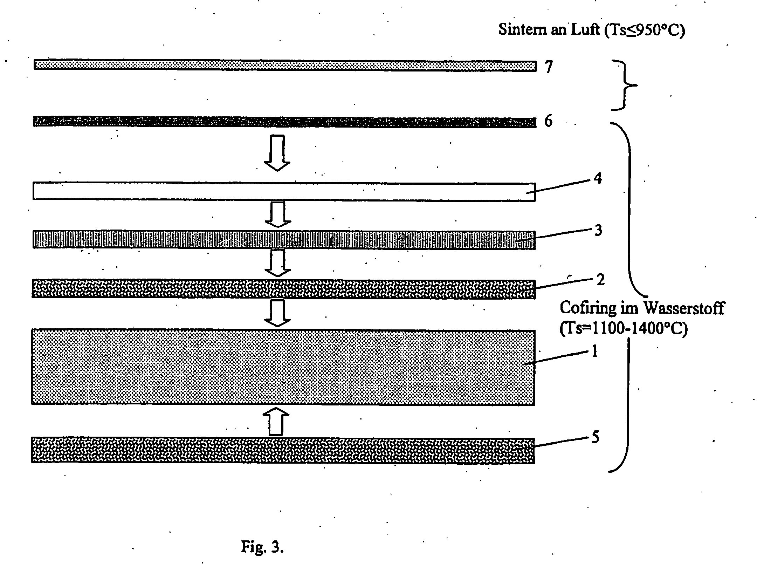

Wie schematisch in einem Aufbau in Figuren 1 und 3 gezeigt, ist auf eine Seite des gesinterten porösen Substrates 1, mit einer Dicke von 0.5 mm und einer Porosität von mindestens 40 %, bevorzugt 50% auf der Basis einer CrFe5-Legierung (EP 0 578 855) eine Zwischenschicht 5 aus La_{0.1}Ca_{0.9}TiO₃ im Siebdruckverfahren, mit einer Dicke von 80 µm aufgetragen und getrocknet worden. Danach wird auf die gegenüberliegende Substratseite eine Zwischenschicht 2 mit gleicher Schichtzusammensetzung und mit einer Dicke von 20 µm aufgetragen und getrocknet. Diese Zwischenschicht 2 weist also eine kleinere Schichtdicke, als die Zwischenschicht 5 auf.

Auf diese getrocknete Zwischenschicht 2 wird eine Nihaltige Anode 3 mit einer Schicht (Ni/Zr_{0.9}Sc_{0.1}O_{1.95}) in einer Dicke von 25 µm aufgetragen und anschließend getrocknet. Auf die Anode 3 wird anschließend eine den Elektrolyten 4 bildende Schicht aus Zr_{0.9}Sc_{0.1}O_{1.95} mit einer Dicke von 60 µm im Doppeldruck aufgetragen und getrocknet. Weiterhin wird auf die Elektrolytschicht eine dünne Ce_{0.9}Gd_{0.1}0_{1.95}-Schicht 6 siebgedruckt.

Die organischen Komponenten werden aus den Schichten an Luft bei Temperaturen im Bereich 400 bis 500 °C ausgetrieben. Die Schichten werden anschließend in trockener Wasserstoffatmosphäre im Cofiring bei einer Wärmebehandlung gesintert. Durch die Sinterung in Wasserstoffatmosphäre wird eine erhöhte elektronische Leitfähigkeit bei La_{0.1}Ca_{0.9}TiO₃-Perowskiten und Ceroxid erreicht.

Die Kathode 7 wird mit La_{0.6}Sr_{0.4}Fe_{0.8}Co_{0.2}O₃ gebildet. Sie kann als Schicht auf die bereits gesinterte Ce_{0.9}Gd_{0.1}O_{1.95}-Oberfläche 6 in Siebdrucktechnik aufgetragen und getrocknet werden. Die Sinterung dieser die Kathode 7 bildenden Schicht erfolgt beim ersten Anfahren des Stacks bzw. der Herstellung der Verbindung von KEA zum Interkonnektor mittels Fügen oder Löten.

## Patentansprüche

1. Kathode-Elektrolyt-Anode Einheit für Festoxid-Brennstoffzellen mit einem auf einem porösen metallischen, plattenförmigen und ebenen Substrat ausgebildeten Schichtaufbau mit in Form von Schichten gebildeter poröser Anode, gasdichtem Elektrolyten und poröser Kathode, **dadurch gekennzeichnet, dass** die die Anode (3) bildende Schicht vom metallischen Substrat (1) durch eine bei einem Sauerstoffpartialdruck unterhalb 10⁻¹² bar elektronisch leitende keramische, eine Barrierewirkung für Chrom und Eisen aufweisende Zwischenschicht (2), die aus oder mit einem Seltenerd-Calcium-Titanat, Titancarbid und/oder einem Seltenerd-Calcium-Chromit-Titanat gebildet ist, getrennt ist.

2. Kathode-Elektrolyt-Anode-Einheit nach Anspruch 1, **dadurch gekennzeichnet, dass** die Zwischenschicht (2) mit einem Seltenerd-Chromit-Titanat in Mischung mit MeₓZr₁₋ₓO₂ oder MeₓCe₁₋ₓO_{2,}wobei Me ein Erdalkali-oder Seltenerdmetall ist, gebildet ist.

3. Kathode-Elektrolyt-Anode-Einheit nach Anspruch 1 oder 2, **dadurch gekennzeichnet, dass** auf der der Zwischenschicht (2) gegenüberliegenden Seite des Substrates (1) eine weitere Schicht (5) aus keramischem elektronisch leitendem Stoff ausgebildet ist.

4. Kathode-Elektrolyt-Anode-Einheit nach einem der vorhergehenden Ansprüche, **dadurch gekennzeichnet, dass** das Substrat (1) aus gesintertem Metallpulver einer Eisen-Chrom-Legierung, mit einem Mindestanteil an Chrom von 22%, gebildet ist.

5. Kathode-Elektrolyt-Anode-Einheit nach einem der vorhergehenden Ansprüche, **dadurch gekennzeichnet, dass** das Substrat (1) eine Porosität von mindestens 40 % aufweist.

6. Kathode-Elektrolyt-Anode-Einheit nach einem der vorhergehenden Ansprüche, **dadurch gekennzeichnet, dass** die Zwischenschicht(en) (2, 5) mit (La₁₋ₓCaₓ)_{1-α} (Cr₁-yTiy)_{1-β}O_{3-δ} mit x = 0,7-1, y = 0,7-0,1, α = 0-0,15, β = 0-0,1 und δ = 0-0,1 gebildet ist/sind.

7. Kathode-Elektrolyt-Anode-Einheit nach einem der vorhergehenden Ansprüche, **dadurch gekennzeichnet, dass** die die Anode (3) bildende Schicht mit Ce₁₋ₓMeₓO₂, der die Zwischenschicht (en) (2, 5) bildenden Keramik, Ni/Ce₁₋ₓMeₓO₂ und/oder Ni/Zr₁-ₓMeₓO₂, mit Me als Erdalkali oder Seltenerdmetall, gebildet ist.

8. Kathode-Elektrolyt-Anode-Einheit nach einem der vorhergehenden Ansprüche, **dadurch gekennzeichnet, dass** die den Elektrolyten (4) bildende Schicht mit Scandium stabilisiertem Zirkonoxid gebildet ist.

9. Kathode-Elektrolyt-Anodeeinheit nach einem der vorhergehenden Ansprüche, **dadurch gekennzeichnet, dass** die Dicke der zwischen Anode (3) und Substrat (1) ausgebildete Zwischenschicht (2) kleiner als die Dicke der auf der anderen Seite des Substrates (1) ausgebildeten Zwischenschicht (5) ist.

10. Verfahren zur Herstellung von Kathode-Elektrolyt-Anode-Einheiten nach einem der Ansprüche 1 bis 9, **dadurch gekennzeichnet, dass** auf das metallische poröse Substrat (1) mindestens eine Zwischenschicht (2), die aus oder mit einem Seltenerd-Calcium-Titanat, Titancarbid und/oder einem Seltenerd-Calcium-Chromit-Titanat gebildet ist, eine die Anode (3) bildende Schicht, eine den Elektrolyten (4) bildende Schicht aufgebracht werden und nach folgend eine Wärmebehandlung bei einer Temperatur oberhalb 1000°C in einer reduzierenden Wasserstoffatmosphäre durchgeführt wird und dann eine die Kathode (7) bildende Schicht aufgebracht wird.

11. Verfahren nach Anspruch 10, **dadurch gekennzeichnet, dass** auf dem metallischen Substrat(1) durch eine Voroxidation bei der Wärmebehandlung eine Oxidschicht ausgebildet wird.

12. Verfahren nach Anspruch 10 oder 11, **dadurch gekennzeichnet, dass** die Wärmebehandlung im Cofiring durchgeführt wird.

13. Verfahren nach einem der Ansprüche 10 bis 12, **dadurch gekennzeichnet, dass** alle Schichten im Siebdruckverfahren aufgebracht und vor der Wärmebehandlung getrocknet werden.

14. Verfahren nach einem der Ansprüche 10 bis 13, **dadurch gekennzeichnet, dass** vor der Wärmebehandlung organische Komponenten bei einer vorgeschalteten Wärmebehandlung bei Temperaturen unterhalb 500°C ausgetrieben werden.

15. Verfahren nach einem der Ansprüche 10 bis 14, **dadurch gekennzeichnet, dass** die die Kathode bildende Schicht bei der Wärmebehandlung einer nicht zur Sinterung führenden Trocknung unterzogen wird.

16. Verfahren nach einem der Ansprüche 10 bis 15, **dadurch gekennzeichnet, dass** die Kathode (7) beim ersten Aufheizen der Brennstoffzelle gesintert wird.

## Claims

1. A cathode-electrolyte-anode unit for solid oxide fuel cells with a layer structure formed on a porous, metallic, plate-shaped and flat substrate with a porous anode constituted in the form of layers, a gas-tight electrolyte and a porous cathode, **characterised in that** the layer constituting the anode (3) is separated from the metallic substrate (1) by a ceramic intermediate layer (2) which is electronically conductive at an oxygen partial pressure below 10⁻¹² bar and has a barrier effect for chromium and iron, which is constituted of or with a rare earth-calcium-titanate, titanium carbide and/or a rare earth-calcium-chromite-titanate.

2. The cathode-electrolyte-anode unit according to claim 1, **characterised in that** the intermediate layer (2) is constituted with a rare earth-chromite-titanate in a mixture with MeₓZr₁₋ₓO₂ or MeₓCe₁₋ₓO₂, wherein Me is an alkaline earth metal or rare earth metal.

3. The cathode-electrolyte-anode unit according to claim 1 or 2, **characterised in that**, on the side of the substrate (1) opposite the intermediate layer (2), another layer (5) of ceramic, electronically conductive substance is formed.

4. The cathode-electrolyte-anode unit according to one of the preceding claims, **characterised in that** the substrate (1) is constituted of sintered metal powder of an iron-chromium alloy with a minimum chromium content of 22%.

5. The cathode-electrolyte-anode unit according to one of the preceding claims, **characterised in that** the substrate (1) has a porosity of at least 40%.

6. The cathode-electrolyte-anode unit according to one of the preceding claims, **characterised in that** the intermediate layer(s) (2, 5) is/are constituted with (La₁₋ₓCaₓ)_{1-α} (Cr₁-yTiy)_{1-β}O_{3-δ}, with x = 0.7 - 1, y = 0.7 - 0.1, α = 0 - 0.15, β = 0 -0.1 and δ=0-0.1.

7. The cathode-electrolyte-anode unit according to one of the preceding claims, **characterised in that** the layer constituting the anode (3) is constituted with Ce₁₋ₓMeₓO₂, the ceramic constituting the intermediate layer(s) (2, 5), Ni/Ce₁₋ₓMeₓO₂ and/or Ni/Zr₁₋ₓMeₓO₂, with Me as an alkaline earth or rare earth metal.

8. The cathode-electrolyte-anode unit according to one of the preceding claims, **characterised in that** the layer constituting the electrolyte (4) is constituted with scandium-stabilised zirconium oxide.

9. The cathode-electrolyte-anode unit according to one of the preceding claims, **characterised in that** the thickness of the intermediate layer (2) formed between anode (3) and substrate (1) is less than the thickness of the intermediate layer (5) formed on the other side of the substrate (1).

10. A method of manufacturing cathode-electrolyte-anode units according to one of claims 1 to 9, **characterised in that** at least one intermediate layer (2), which is constituted from or with a rare earth-calcium-titanate, titanium carbide and/or a rare earth-calcium-chromite-titanate, a layer constituting the anode (3) and a layer constituting the electrolyte (4) are applied on to the metallic porous substrate (1) and a heat treatment is subsequently carried out at a temperature above 1000°C in a reducing hydrogen atmosphere and then a layer constituting the cathode (7) is applied.

11. The method according to claim 10, **characterised in that** an oxide layer is formed on the metallic substrate (1) by means of a pre-oxidation during the heat treatment.

12. The method according to claim 10 or 11, **characterised in that** the heat treatment is carried out in a co-firing operation.

13. The method according to one of claims 10 to 12, **characterised in that** all of the layers are applied in a screen-printing process and dried prior to the heat treatment.

14. The method according to one of claims 10 to 13, **characterised in that**, prior to the heat treatment, organic components are driven off in an upstream heat treatment at temperatures below 500°C.

15. The method according to one of claims 10 to 14, **characterised in that** the layer constituting the cathode is subjected during the heat treatment to a drying that does not lead to sintering.

16. The method according to one of claims 10 to 15, **characterised in that** the cathode (7) is sintered during the first heating of the fuel cell.

## Revendications

1. Unité cathode-électrolyte-anode pour piles à combustible à oxyde solide avec une structure stratifiée formée sur un substrat métallique poreux, en forme de plaque et plan, avec une anode poreuse formée sous la forme de couches, , un électrolyte étanche aux gaz et une cathode poreuse, **caractérisée en ce que** la couche formant l'anode (3) est séparée du substrat métallique (1) par une couche intermédiaire (2) céramique électroniquement conductrice à une pression partielle en oxygène inférieure à 10⁻¹² bar, présentant un effet de barrière pour le chrome et le fer, qui est formée à partir ou avec un titanate de calcium-terre rare, du carbure de titane et/ou un titanate de chromite-calcium-terre rare.

2. Unité cathode-électrolyte-anode selon la revendication 1, **caractérisée en ce que** la couche intermédiaire (2) est formée avec un titanate de chromite-terres rares en mélange avec le composé de formule MeₓZr₁₋ₓO₂ ou MeₓCe₁₋ₓO₂, où Me est un métal alcalino-terreux ou un métal de terre rare.

3. Unité cathode-électrolyte-anode selon la revendication 1 ou 2, **caractérisée en ce que** sur la face du substrat (1) opposée à la couche intermédiaire (2) est formée une autre couche (5) constituée d'un matériau céramique électroniquement conducteur.

4. Unité cathode-électrolyte-anode selon l'une quelconque des revendications précédentes, **caractérisée en ce que** le substrat (1) est formé à partir d'une poudre de métal frittée d'un alliage de fer-chrome, avec une proportion minimale de 22 % de chrome.

5. Unité cathode-électrolyte-anode selon l'une quelconque des revendications précédentes, **caractérisée en ce que** le substrat (1) présente une porosité d'au moins 40 %.

6. Unité cathode-électrolyte-anode selon l'une quelconque des revendications précédentes, **caractérisée en ce que** la ou les couches intermédiaire(s) (2, 5) est/sont formée(s) avec un composé de formule (La₁₋ₓCaₓ)_{1-α} (Cr₁-yTiy)_{1-β}O₃₋avec x = 0,7 à 1, y = 0,7 à 0,1, α = 0 à 0,15, β = 0 à 0,1 et δ = 0 à 0,1.

7. Unité cathode-électrolyte-anode selon l'une quelconque des revendications précédentes, **caractérisée en ce que** la couche formant l'anode (3) est formée du composé de formule Ce₁₋ₓMeₓO₂, de céramique formant la ou les couche(s) intermédiaire(s) (2, 5), du composé de formule Ni/Ce₁₋ₓMeₓO₂ et/ou Ni/Zr₁₋ₓMeₓO₂, de Me en tant que métal alcalino-terreux ou métal de terre rare.

8. Unité cathode-électrolyte-anode selon l'une quelconque des revendications précédentes, **caractérisée en ce que** la couche formant l'électrolyte (4) est formée avec de l'oxyde de zirconium stabilisé par du scandium.

9. Unité cathode-électrolyte-anode selon l'une quelconque des revendications précédentes, **caractérisée en ce que** l'épaisseur de la couche intermédiaire (2) formée entre l'anode (3) et le substrat (1) est inférieure à l'épaisseur de la couche intermédiaire (5) formée sur l'autre face du substrat (1).

10. Procédé de fabrication d'unités cathode-électrolyte-anode selon l'une quelconque des revendications 1 à 9, **caractérisé en ce qu'**au moins une couche intermédiaire (2), qui est formée à partir de ou avec un titanate de calcium-terre rare, du carbure de titane et/ou un titanate de chromite-calcium-terre rare, une couche formant l'anode (3) et une couche formant l'électrolyte (4) sont appliquées sur le substrat (1) métallique poreux, après quoi on applique un traitement thermique à une température supérieure à 1000 °C dans une atmosphère d'hydrogène réductrice, puis on applique une couche formant la cathode (7).

11. Procédé selon la revendication 10, **caractérisé en ce qu'**une couche d'oxyde est formée sur le substrat métallique (1) par une préoxydation lors du traitement thermique.

12. Procédé selon la revendication 10 ou 11, **caractérisé en ce que** le traitement thermique est réalisé en cocuisson.

13. Procédé selon l'une quelconque des revendications 10 à 12, **caractérisé en ce que** toutes les couches sont appliquées selon le procédé de sérigraphie et sont séchées avant le traitement thermique.

14. Procédé selon l'une quelconque des revendications 10 à 13, **caractérisé en ce que**, avant le traitement thermique, des composés organiques sont extraits dans le cadre d'un traitement thermique monté en amont à des températures inférieures à 500 °C.

15. Procédé selon l'une quelconque des revendications 10 à 14, **caractérisé en ce que** la couche formant la cathode est soumise, lors du traitement thermique, à un séchage ne conduisant pas à un frittage.

16. Procédé selon l'une quelconque des revendications 10 à 15, **caractérisé en ce que** la cathode (7) est frittée lors du premier chauffage de la pile à combustible.
